# EUROPÄISCHE PATENTANMELDUNG

(11) **EP 2 778 078 A1**
(43) Veröffentlichungstag der Anmeldung: **17.09.2014**
(21) Anmeldenummer: 14159422.6
(22) Anmeldetag: 13.03.2014
(51) Int. Cl.: B65B 31/04, G01N 21/77, G01N 21/90

(54) **Messvorrichtung für Schlauchbeutelverpackungsmaschinen**

(30) Priorität: 13.03.2013 DE 102013004292
(71) Anmelder: Witt GmbH & Co. Holding und Handels-KG, 58454 Witten (DE)
(72) Erfinder: Bender, Martin, 44267 Dortmund (DE)
(74) Vertreter: Isfort, Olaf

(57) **Zusammenfassung**

Die Erfindung betrifft eine Messvorrichtung, insbesondere für eine Schlauchbeutelverpackungsmaschine 1, zur Bestimmung der Konzentration zumindest eines Gases innerhalb einer zu verschliessenden Verpackung 2, wobei über eine Gaslanze 3 ein Schutzgas in die zu verschliessende Verpackung 2 einführbar ist. Die Messvorrichtung umfasst einen Indikator 4, einen Lichtleiter 5 und eine Auswerteeinheit 6, wobei der Indikator 4 aus einem fluoreszierenden Material, vorzugsweise einem Polymermaterial besteht und am Ende des Lichtleiters 5 und innerhalb der zu verschliessenden Verpackung 2 angeordnet ist, wobei die Auswerteeinheit 6 zur Bestimmung der Konzentration des zumindest einen Gases ein optisches Signal des Indikators 4 über den Lichtleiter 5 aufnimmt und auswertet.

## Beschreibung

Die Erfindung betrifft eine Messvorrichtung, insbesondere für eine Schlauchbeutelverpackungsmaschine, zur Bestimmung der Konzentration zumindest eines Gases innerhalb einer zu verschliessenden Verpackung, wobei über eine Gaslanze ein Schutzgas in die zu verschliessende Verpackung einführbar ist.

Es stehen vielfältige Möglichkeiten zur Haltbarmachung von Lebensmitteln zu Verfügung beispielsweise Pasteurisieren, Bestrahlen, Trocknen, oder die Verwendung von Konservierungsmitteln. Eine einfache Möglichkeit, Lebensmittel haltbar zu machen, ohne das Lebensmittel zu beeinträchtigen oder zu verändern ist, das Verpacken in einem luftdichten Behältnis, in dem die Zusammensetzung der darin enthaltenen Gase durch den Zusatz von Schutzgasen nicht der Standardatmosphäre entspricht.

Hierbei wird insbesondere der Sauerstoffanteil innerhalb der Verpackung reduziert, so dass sich beispielsweise aerobe Bakterien nicht mehr oder nur sehr langsam vermehren können. Dadurch wird ein Verderben der abgepackten Lebensmittel verhindert oder entsprechend verlangsamt, ohne die Qualität oder den Geschmack zu beeinträchtigen. Die Atmosphäre innerhalb der Verpackung setzt sich dabei beispielsweise aus natürlichen, geruchlosen und geschmacksneutralen Bestandteilen der Luft zusammen, z. B. Kohlendioxid, Stickstoff oder Sauerstoff, deren Mengenanteile in Abhängigkeit vom verpackten Produkt variieren können.

Zum Verpacken von beispielsweise stückigen Gütern kommen Schlauchbeutelverpackungsmaschinen mit einem horizontalen Form-, Füll- und Schliesssystem zum Einsatz. Dabei wird beim Einlauf eines sich formenden Schlauchbeutels das Lebensmittel mit einem Schutzgas gespült. Hierzu wird eine Gaslanze oder ein flaches Begasungsrohr bis dicht vor eine Quersiegelzone geführt, wobei die Luft beispielsweise im Gegenstrom zum einlaufenden Gut ausgespült wird.

Zum Verpacken von beispielsweise stückigem oder grobkörnigen Gütern werden Schlauchbeutelverpackungsmaschinen verwendet mit einem vertikalen Form-, Füll-, und Schliesssystem. Das zu verpackende Gut fällt dabei vorportioniert durch eine Schutzgassäule und verliert dabei die dem Gut anhaftende Luft. Hierzu wird wie bei dem horizontalen Form-, Füll- und Schliesssystem eine Gaslanze oder ein dünnes Begasungsrohr bis kurz vor die Quersiegelzone geführt.

In jedem Fall ist es notwendig bei den beschriebenen Schlauchbeutelverpackungsmaschinen die Konzentration des Schutzgases und/oder die Sauerstoffkonzentration innerhalb der Verpackung zu bestimmen. Damit werden die Qualität der Verpackung und die Haltbarkeit des Lebensmittels sichergestellt.

Im Stand der Technik findet sich hierzu die Möglichkeit, die Konzentration des Schutzgas oder des Sauerstoffs nach dem Verschliessen der Verpackung zu bestimmen. Dabei ist es nicht möglich, die Konzentration während des Verpackungsvorgangs zu bestimmen, und etwaige Fehler oder Abweichungen stellen sich erst nach der Produktion heraus. Dies führt zu einem hohen Kostenaufwand auf Grund des produzierten Ausschusses beim Auftreten von Fehlern oder Abweichungen. Darüber hinaus ist der Aufwand zur Bestimmung der Konzentration des Schutzgas oder des Sauerstoffs nach dem Verschliessen der Verpackung zu gross, um dies ständig durchzuführen.

Weiterhin findet sich im Stand der Technik eine Vorrichtung, bei der an der Gaslanze eine Gasrückführleitung vorgesehen ist, welche eine kleine Menge des sich im Schlauchbeutel befindlichen Gases an eine externe Messsensorik leitet. Die Analyse des Gases findet dabei erst mit einem Zeitversatz zum Verpackungsvorgang statt. Bei einer Produktionsgeschwindigkeit von beispielsweise 60 Verpackungen pro Sekunde wird eine Vielzahl von Verpackungen produziert bis die Konzentration des Schutzgases oder des Sauerstoffs festgestellt ist. Hierbei entsteht bis zur Meldung oder Erkennen des Fehlers ein kostenintensiver Ausschuss.

Daher stellt sich die Aufgabe, eine Messung des Schutzgases oder des Sauerstoffgehalts innerhalb der Verpackung mit geringem Aufwand und ohne oder jedenfalls nur geringer Zeitverzögerung zu ermöglichen.

Die Erfindung löst die Aufgabe dadurch, dass die Messvorrichtung einen Indikator, einen Lichtleiter und eine Auswerteeinheit umfasst, wobei der Indikator aus einem fluoreszierenden Material, vorzugsweise einem Polymermaterial, besteht und am Ende des Lichtleiters und innerhalb der zu verschliessenden Verpackung angeordnet ist, wobei die Auswerteeinheit zur Bestimmung der Konzentration des zumindest einen Gases ein optisches Signal des Indikators über den Lichtleiter aufnimmt und auswertet.

Ein besonderer Vorteil der Erfindung gegenüber dem Stand der Technik ist, dass der Indikator aus einem fluoreszierenden Material, vorzugsweise einem Polymermaterial, besteht und am Ende des Lichtleiters und innerhalb der zu verschliessenden Verpackung angeordnet ist, wobei die Auswerteeinheit zur Bestimmung der Konzentration des zumindest einen Gases ein optisches Signal des Indikators über den Lichtleiter aufnimmt und auswertet. Im Gegensatz zum Stand der Technik muss zur Bestimmung der Konzentration kein Gas aus der Verpackung gefördert werden. Gemäss dem Stand der Technik entsteht durch die Gasförderung ein nicht zu vernachlässigender Zeitversatz, wie oben erläutert. Entsprechend der Erfindung wird die Konzentration des Gases im Wesentlichen in Echtzeit bestimmt. Somit kann eine Qualitätskontrolle während der Verpackung des Gutes durchgeführt werden und Fehler oder Abweichungen in der Konzentration des Gases sofort erkannt werden.

Der Indikator besteht dabei vorzugsweise aus einem fluoreszierenden Polymermaterial, welches nur einen geringen Wartungsaufwand erfordert. Damit kann die Messvorrichtung im Dauerbetrieb verwendet werden. Es entfallen somit kostenaufwendige Standzeiten der Schlauchbeutelverpackungsmaschine auf Grund von Wartungsarbeiten an der Messvorrichtung.

Besonders vorteilhaft ist es dabei, dass der Indikator innerhalb der zu verschliessenden Verpackung angeordnet ist. Damit wird sichergestellt, dass die Messung an der Atmosphäre in der zu verschliessenden Verpackung vorgenommen wird und nicht ausserhalb.

Die Verwendung eines Lichtleiters erlaubt es weiterhin, das optische Signal des Indikators schnell und einfach an die Auswerteeinheit zu übertragen. Der Indikator ist dabei beispielsweise derartig ausgebildet, dass bei einer geeigneten Konzentration des Gases der Indikator ein einfaches optisches Signal durch Fluoreszenz abgibt. Die Auswerteeinheit stellt bei dieser Ausführungsform lediglich das Vorhandensein des Signals fest oder analysiert das Spektrum der Fluoreszenz. Zur Anregung der Fluoreszenz kann das Licht einer geeigneten Lichtquelle (z.B. einer Laserdiode) über den Lichtleiter dem Indikator zugeführt werden. Dabei ist die Auswerteeinheit besonders einfach ausgebildet und Fehler oder Ausfälle werden vermieden.

In einer vorteilhaften Ausgestaltung der Erfindung ist der Indikator in Bereiche unterteilt, wobei jeder Bereich sensitiv auf eine bestimmte Konzentration eines Gases ist. Unterschiedliche Bereiche des Indikators können dabei auf bestimmte Konzentrationen des Gases beispielweise von Sauerstoff oder Kohlendioxid ansprechen. So kann die Qualität der Verpackung besser bewertet werden. Dies erfolgt beispielsweise mit einer Unterteilung in einen idealen, einen akzeptablen und einen inakzeptablen Konzentrationsbereich. Hierzu kann der Indikator aus unterschiedlichen Materialien bestehen, die nur bei einer bestimmten Konzentration fluoreszieren.

Weiterhin ist es besonders vorteilhaft, dass Bereiche des Indikators sensitiv auf eine Konzentration eines bestimmten Gases sind. In dieser Ausgestaltung der Erfindung können mit dem Indikator die Konzentrationen mehrerer Gase gleichzeitig bestimmt werden. So ist es beispielsweise möglich, die Konzentration von Sauerstoff und Stickstoff zu überwachen. Da für unterschiedliche Lebensmittel unterschiedliche Verpackungsatmosphären notwendig sind, können mit einem Indikator entsprechend dieser Ausführungsform mehrere Gase je nach Verpackungsgut überwacht werden.

Darüber hinaus kann die Schlauchbeutelverpackungsmaschine auch einfach und schnell umgerüstet werden, falls eine andere Verpackungsatmosphäre verwendet und überwacht werden muss. Hierzu kann der Indikator einfach ausgetauscht werden.

In einer weiteren vorteilhaften Ausgestaltung ist vorgesehen, dass der Indikator bei einem vordefinierten Partialdruck des zu bestimmenden Gases fluoresziert und/oder Licht in einem bestimmten Wellenlängenbereich reflektiert und/oder transmittiert. Dabei kann die Konzentration des Gases auf den Partialdruck zurückgeführt werden und unterschiedliche Eigenschaften des Indikators genutzt werden, um diesen zu bestimmen. Die Auswerteeinheit ist dabei entweder passiv oder aktiv. So wird bei einem fluoreszierenden Indikator eine passive Auswerteeinheit verwendet, welche das optische Signal des Indikators aufnimmt. Bei der Auswertung des reflektierten und/oder transmittierten Lichts strahlt die Auswerteeinheit Licht auf den Indikator über den Lichtleiter aus und bestimmt aus dem resultierenden Signal den Partialdruck beziehungsweise die Konzentration des zu bestimmenden Gases.

Vorteilhafterweise ist der Indikator flach ausgebildet und nimmt somit nur wenig Raum innerhalb der zu verschliessenden Verpackung ein. Damit können auch flache Verpackungen überwacht werden.

Eine weitere Ausgestaltung der Erfindung sieht vor, dass der Indikator formschlüssig an dem Lichtleiter angeformt ist. Somit kann das optische Signal des Indikators unverfälscht übertragen werden.

In einer weiteren besonders vorteilhaften Ausführungsform ist der Lichtleiter entlang der Gaslanze in die zu verschliessende Verpackung geführt. Dabei ist der Indikator nicht direkt am Gasausgang vorgesehen, sondern versetzt dazu. Damit wird sichergestellt, dass tatsächlich das in der Verpackung beziehungsweise im Schlauchbeutel befindliche Gas und nicht das aus der Gaslanze ausströmende Schutzgas hinsichtlich der zu bestimmenden Gaszusammensetzung untersucht wird.

Eine Ausgestaltungsform der Erfindung sieht vor, dass der Lichtleiter und der Indikator bis zu einer Quersiegelzone der zu verschliessenden Verpackung geführt ist. Dabei wird der Indikator bis ganz zum Rand der zu verschliessenden Verpackung geführt, um hierdurch sicherzustellen, dass das Gas innerhalb der Verpackung untersucht wird.

Eine weitere Ausführungsform der Erfindung sieht vor, dass eine Sensorik zur Temperaturerfassung, vorzugsweise innerhalb der zu verschliessenden Verpackung, vorgesehen ist. Ein herkömmliches Thermoelement oder ein Termperaturwiderstand können eingesetzt werden. Alternativ kann die Sensorik eine fluoreszierende Substanz aufweisen. Die fluoreszierende Substanz weist dabei ein temperaturabhängiges Fluoreszenzspektrum auf. Ein Signal der Sensorik umfasst dabei das von der Substanz abgestrahlte Spektrum. Somit kann über das Signal der Sensorik die Temperatur bestimmt werden. Die Temperatur kann in der Auswerteeinheit bei der Bestimmung der Gaskonzentration zur Kompensation von Temperaturabhängigkeiten berücksichtigt werden.

In einer besonders vorteilhaften Ausführungsform wird das Signal der Sensorik zusammen mit dem Signal des Indikators über den Lichtleiter an die Auswerteeinheit übertragen, wobei die Auswerteeinheit die Signale auswertet. Damit wird eine einfache Bestimmung der Temperatur innerhalb der zu verschliessenden Verpackung ermöglicht.

Die Erfindung sieht darüber hinaus ein Messverfahren vor, insbesondere für eine Schlauchbeutelverpackungsmaschine, zur Bestimmung der Konzentration zumindest eines Gases innerhalb einer zu verschliessenden Verpackung, wobei über eine Gaslanze ein Schutzgas in die zu verschliessende Verpackung eingeführt wird, dadurch gekennzeichnet, dass die Gaskonzentration über einen Indikator angezeigt wird, wobei ein Lichtleiter in die zu verschliessende Verpackung geführt und ein optisches Signal des Indikators über den Lichtleiter an eine Auswerteeinheit übertragen wird, wobei die Verpackung unmittelbar nach dem Übertragen des Signals verschlossen, vorzugsweise verschweisst, wird.

In einer besonders vorteilhaften Ausgestaltung des Messverfahrens ist weiterhin vorgesehen, dass die Auswerteeinheit aus der Reflektivität, der Transmissivität und/oder der Fluoreszenz des Indikators in einem bestimmten optischen Signalbereich die Konzentration des Gases bestimmt.

Eine weitere Ausführungsform des Messverfahrens sieht vor, dass die Konzentration von Sauerstoff, Stickstoff, Kohlendioxid und/oder eines Gasgemisches bestimmt wird.

In einer besonders vorteilhaften Ausführungsform des Messverfahrens wird ein Umgebungsdruck bestimmt und zur Signalkompensation verwendet. In vorteilhafter Weise wird die Auswerteeinheit zur Signalkompensation verwendet. Dabei wird die Druckbestimmung auf herkömmliche Weise durchgeführt, beispielsweise mit Hilfe eines Barometers. Dadurch wird die Genauigkeit der Messung erhöht.

In einer weiteren vorteilhaften Ausgestaltung des Messverfahrens wird das optische Signal in Echtzeit übertragen und ausgewertet. Dabei umfasst das optische Signal Signale von dem optischen Indikator und der Sensorik zur Temperaturerfassung. Damit ist eine Qualitätsprüfung bei jedem Verpackungsvorgang möglich.

Weitere Merkmale, Einzelheiten und Vorteile der Erfindung ergeben sich aus dem Wortlaut der Ansprüche sowie aus der Beschreibung von Ausführungsbeispielen anhand der Figuren.

Die Erfindung wird in weiteren Einzelheiten anhand des nachfolgenden Textes mit Bezug auf bevorzugte Ausführungsbeispiele anhand der Figuren näher erläutert.

Es zeigen:
- Figur 1:: in einer schematischen Darstellung eine Schlauchbeutelverpackungsmaschine mit einem horizontalen Form-, Füll- und Schliesssystem und
- Figur 2:: eine Detailansicht einer Schlauchbeutelverpackungsmaschine mit einer Gaslanze, einem Lichtleiter und einem Indikator.

Die Bezugszeichen und deren Bedeutung sind zusammengefasst in der Bezugszeichenliste. Im allgemeinen bezeichnen dieselben Bezugszeichen dieselben Teile.

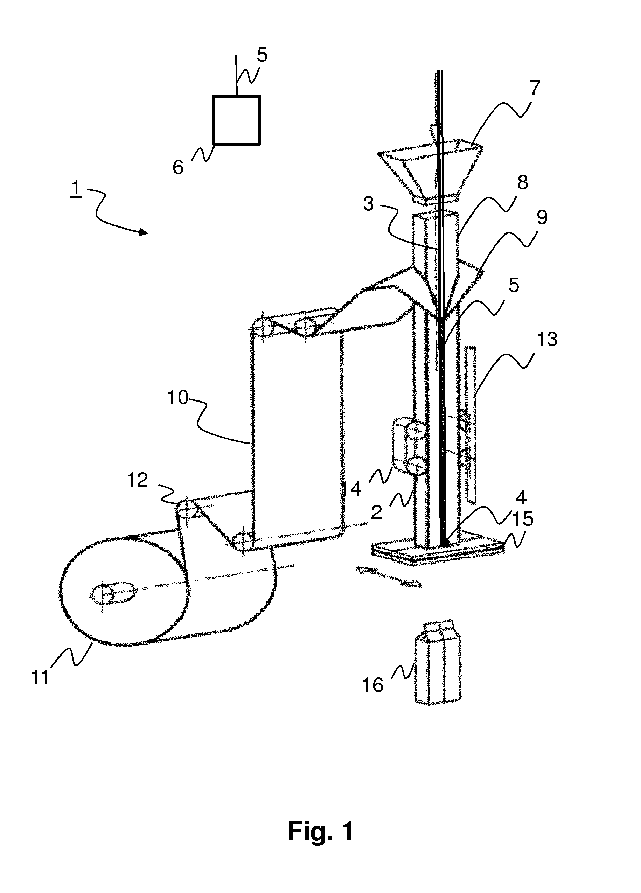

Figur 1 zeigt in einer schematischen Darstellung eine Schlauchbeutelverpackungsmaschine 1 mit einem horizontalen Form-, Füll- und Schliesssystem. Dabei ist vorgesehen, eine Konzentration zumindest eines Gases innerhalb einer zu verschliessenden Verpackung 2 zu bestimmen. Das Gas wird über eine Gaslanze 3 in die zu verschliessende Verpackung 2 eingeführt. Die Erfindung sieht zur Bestimmung der Konzentration einen Indikator 4 vor, welcher an einem Lichtleiter 5 angeformt ist und ein optisches Signal an eine Auswerteeinheit 6 überträgt.

Das zu verpackende Gut wird in der dargestellten Ausführungsform über einen Fülltrichter 7 in ein Füllrohr 8 eingeführt. Das Füllrohr 8 ragt dabei in eine Formschulter 9 über welche eine Folie 10 auf das Füllrohr 8 aufgetragen wird. Die Folie 10 wird von einer Vorratsrolle 11 über eine Abrollvorrichtung 12 auf die Formschulter 9 gefördert.

Die Folie 10 bildet auf dem Füllrohr 8 die zu verschliessende Verpackung 2, wobei eine Längsnahtversiegelung 13 die Folie 8 zuvor verschliesst und einen Schlauchbeutel formt. Der Schlauchbeutel wird über eine Vortriebsvorrichtung 14 von dem Füllrohr 8 abgerollt und weitergefördert.

Die Gaslanze 3 ragt bis kurz vor eine Querversiegelung 15, welche die zu verschliessende Verpackung 2 in Querrichtung verschliesst und von dem

Schlauchbeutel abtrennt. Nach der Querversiegelung 15 ist eine Endverpackung 16 des zu verpackenden Gutes abgeschlossen und steht zum Weitertransport oder zur Lagerung bereit.

Das in die Verpackung eingebrachte Gas dient dazu, die Haltbarkeit des zu verpackenden Gutes zu erhöhen. Dabei verdrängt das eingebrachte Gas die normale Umgebungsluft und reduziert dadurch beispielsweise den Sauerstoffgehalt innerhalb der zu verschliessenden Verpackung 2.

Um die Haltbarkeit des verpackten Gutes sicherzustellen, muss die Konzentration des Gases innerhalb der zu verschliessenden Verpackung 2 überwacht werden. Die Erfindung sieht zur Bestimmung der Konzentration den Indikator 4 vor, welcher an den Lichtleiter 5 angeformt ist und ein optisches Signal an die Auswerteeinheit 6 überträgt. Der Indikator 4 ist dabei aus einem fluoreszierenden Material, vorzugsweise aus einem Polymermaterial geformt. Das Indikatormaterial enthält Substanzen, die eine Fluoreszenz bewirken, wobei das Spektrum der Fluoreszenz von der chemischen Zusammensetzung des den Indikator 4 umgebenden Gases abhängt.

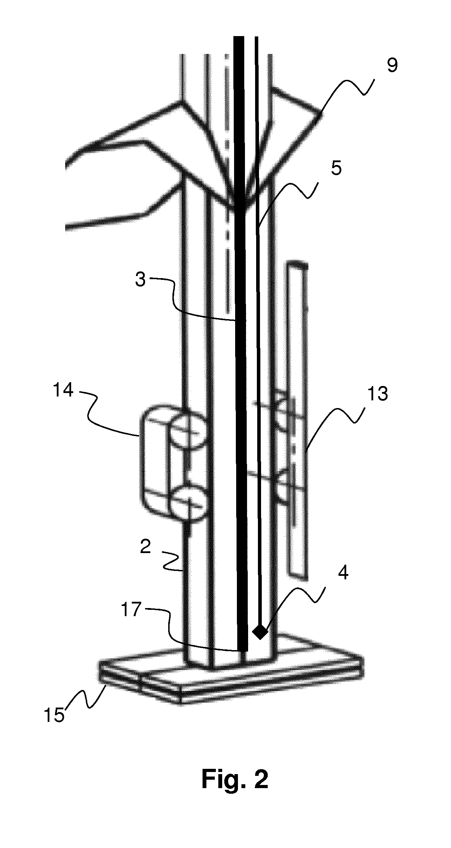

Figur 2 zeigt in einer Detailansicht die Schlauchbeutelverpackungsmaschine 1 mit der Gaslanze 3, dem Indikator 4 und dem Lichtleiter 5. Der Indikator 4 ist in dieser Ausführungsform nicht bis zum Gasausgang 17 der Gaslanze 3 geführt, um sicherzustellen, dass tatsächlich das in der zu verschliessenden Verpackung 2 beziehungsweise im Schlauchbeutel befindliche Gas und nicht das aus der Gaslanze 3 ausströmende Gas hinsichtlich des zu bestimmenden Gases untersucht wird.

### Liste der Bezugszeichen

- 1: Schlauchbeutelverpackungsmaschine
- 2: Verpackung
- 3: Gaslanze
- 4: Indikator
- 5: Lichtleiter
- 6: Auswerteeinheit
- 7: Fülltrichter
- 8: Füllrohr
- 9: Formschulter
- 10: Folie
- 11: Vorratsrolle
- 12: Abrollvorrichtung
- 13: Längsnahtversiegelung
- 14: Vortriebsvorrichtung
- 15: Quernahtsversiegelung
- 16: Endverpackung
- 17: Gasausgang

## Patentansprüche

1. Messvorrichtung, insbesondere für eine Schlauchbeutelverpackungsmaschine (1), zur Bestimmung der Konzentration zumindest eines Gases innerhalb einer zu verschliessenden Verpackung (2), wobei über eine Gaslanze (3) ein Schutzgas in die zu verschliessende Verpackung (2) einführbar ist,
**dadurch gekennzeichnet, dass** die Messvorrichtung einen Indikator (4), einen Lichtleiter (5) und eine Auswerteeinheit (6) umfasst, wobei der Indikator (4) aus einem fluoreszierenden Material, vorzugsweise einem Polymermaterial, besteht und am Ende des Lichtleiters (5) und innerhalb der zu verschliessenden Verpackung (2) angeordnet ist, wobei die Auswerteeinheit (6) zur Bestimmung der Konzentration des zumindest einen Gases ein optisches Signal des Indikators (4) über den Lichtleiter (5) aufnimmt und auswertet.

2. Messvorrichtung nach Anspruch 1, **dadurch gekennzeichnet, dass** der Indikator (4) in Bereiche unterteilt ist, wobei jeder Bereich sensitiv zu einer bestimmten Konzentration eines Gases oder zu einer Konzentration eines bestimmten Gases ist.

3. Messvorrichtung nach einem der Ansprüche 1 oder 2, **dadurch gekennzeichnet, dass** der Indikator (4) bei einem vordefinierten Partialdruck des zu bestimmenden Gases fluoresziert und/oder Licht in einem bestimmten Bereich reflektiert und/oder transmittiert.

4. Messvorrichtung nach einem der Ansprüche 1, 2 oder 3, **dadurch gekennzeichnet, dass** der Indikator (4) flach ausgebildet ist.

5. Messvorrichtung nach einem der Ansprüche 1 bis 4, **dadurch gekennzeichnet, dass** der Indikator (4) formschlüssig an dem Lichtleiter (5) angeformt ist.

6. Messvorrichtung nach einem der Ansprüche 1 bis 5, **dadurch gekennzeichnet, dass** der Lichtleiter (5) entlang der Gaslanze (3) in die zu verschliessende Verpackung (2) geführt ist.

7. Messvorrichtung nach einem der Ansprüche 1 bis 6, **dadurch gekennzeichnet, dass** der Lichtleiter (5) und der Indikator (4) bis zu einer Quersiegelzone der zu verschliessenden Verpackung (2) geführt ist.

8. Messvorrichtung nach einem der Ansprüche 1 bis 7, **dadurch gekennzeichnet, dass** eine Sensorik zur Temperaturerfassung vorgesehen ist.

9. Messvorrichtung nach Anspruch 8, **dadurch gekennzeichnet, dass** die Sensorik zur Temperaturerfassung eine fluoreszierende Substanz aufweist.

10. Messverfahren, insbesondere für eine Schlauchbeutelverpackungsmaschine (1), zur Bestimmung der Konzentration zumindest eines Gases innerhalb einer zu verschliessenden Verpackung (2), wobei über eine Gaslanze (3) ein Schutzgas in die zu verschliessende Verpackung (2) eingeführt wird,
**dadurch gekennzeichnet, dass** die Gaskonzentration über einen Indikator (4) angezeigt wird, wobei ein Lichtleiter (5) in die zu verschliessende Verpackung (2) geführt und ein optisches Signal des Indikators (4) über den Lichtleiter (5) an eine Auswerteeinheit (6) übertragen wird, wobei die zu verschliessende Verpackung (2) unmittelbar nach dem Übertragen des Signals verschlossen, vorzugsweise verschweisst, wird.

11. Messverfahren nach Anspruch 10, **dadurch gekennzeichnet, dass** die Auswerteeinheit (6) aus der Reflektivität, der Transmissivität und/oder der Fluoreszenz des Indikators (4) in einem bestimmten optischen Signalbereich die Konzentration des Gases bestimmt.

12. Messverfahren nach Anspruch 10 oder 11, **dadurch gekennzeichnet, dass** die Konzentration von Sauerstoff, Stickstoff, Kohlendioxid und/oder eines Gasgemisches bestimmt wird.

13. Messverfahren nach einem der Ansprüche 10 bis 12, **dadurch gekennzeichnet, dass** ein Umgebungsdruck bestimmt und zur Signalkompensation verwendet wird.

14. Messverfahren nach einem der Ansprüche 9 bis 12, **dadurch gekennzeichnet, dass** das optische Signal in Echtzeit übertragen und ausgewertet wird.
